# EUROPEAN PATENT APPLICATION

(11) **EP 3 540 326 A1**
(43) Date of publication of application: **18.09.2019**
(21) Application number: 18161958.6
(22) Date of filing: 15.03.2018
(51) Int. Cl.: F24H 3/04, B60H 1/22, F24H 9/18, H05B 3/00

(54) **ELECTRIC HEATER**

(71) Applicant: Mahle International GmbH, 70376 Stuttgart (DE)
(72) Inventor: Cmelik, Alain, 68760 Willer-sur-Thur (FR); Gries, Jean-Philippe, 68000 Colmar (FR)
(74) Representative: Grauel, Andreas

(57) **Abstract**

The invention relates to an electric heater (1, 21), in particular for a heating or an air-conditioning system of a motor vehicle, comprising a heater core (2, 22) having a plurality of heating units (3, 23), said heating units (3, 23) having at least one electric heating element (4, 24) arranged between metallic contact sheet elements (5, 25), wherein the metallic contact sheet elements (5, 25) are electrically contacting the at least one electric heating element (4, 24) to allow an electric current flow through the electric heating elements (4, 24), wherein at least two contact rails (7) are provided such that each of the metallic contact sheet elements (5, 25) is mechanically and electrically connected to one of the contact rails (7), which both have a contact means (8, 28) to contact the contact rails (7) to a power source.

## Description

### Field of the invention

The invention relates to an electric heater, in particular for a heating or an air-conditioning system of a motor vehicle, comprising a heater core having a plurality of heating units, said heating units having at least one electric heating element arranged between metallic contact sheet elements, wherein the metallic contact sheet elements are electrically contacting the at least one electric heating element to allow an electric current flow through the heating elements.

### Description of the background of the invention

Electric heaters are well known in the art especially for the use in a heating or an air-conditioning system of a motor vehicle. The electric heater is used for example to heat up an air flow generated by a fan of the heating or the air-conditioning system. Such an electric heater often comprises a plurality of heating units which respectively contain at least one electric heating element. The heating units are located in an arrangement together with heat dissipating fins and metallic contact sheet elements contacting the electric heating elements.

The metallic sheet elements are connected to the heating elements and furthermore they are connected to a power source to provide the electric current to heat the heating elements due to the electric current. This leads to a great number of electric contacts between each of the metallic contact sheet elements and the power source leading to a number of electric transition resistances decreasing the performance of the electric heater.

### Object of the invention, solution, advantages

Therefore, it is the object of the invention to provide an electric heater which is improved with respect to transitional resistances.

The object is achieved by the features of claim 1.

According to an embodiment an electric heater is provided, in particular for a heating or an air-conditioning system of a motor vehicle, comprising a heater core having a plurality of heating units, said heating units having at least one electric heating element arranged between metallic contact sheet elements, wherein the metallic contact sheet elements are electrically contacting the at least one electric heating element to allow an electric current flow through the heating elements, wherein at least two contact rails are provided such that each of the metallic contact sheet elements is mechanically and electrically connected to one of the contact rails, which both have a contact means to contact the contact rails to a power source. Therefore, a secure and stable electrical and mechanical contact is provided without the high number of contact means to contact the power source.

According to an embodiment, it is of advantage that the metallic contact sheet elements are mechanically connected to the respective contact rail by means of clinching. This allows a durable and secure mechanical connection realized by an easy connection process.

Another embodiment shows that a plurality of heating units is provided which comprise metallic contact sheet elements wherein the metallic contact sheet elements of the plurality of heating units are arranged parallel to each other. Therefore, a structure is provided which is light and doesn't need to much space.

Furthermore, it is of advantage that each of the heating units having a first metallic contact sheet element and a second metallic contact sheet element, wherein the first metallic contact sheet elements are connected to a first contact rail and the second metallic contact sheet elements are connected to the second contact rail. Therefore, a clear structure is provided allowing a stable and durable mechanical structure.

Another embodiment shows that the first metallic contact sheet elements are arranged in a first plane and the second metallic contact sheet elements are located in a second plane, the second plane is spaced apart from the first plane and arranged parallel to the first plane. This allows a small packaging of the heating units.

Furthermore, it is of advantage that the contact means are aligned perpendicular to the metallic contact sheet elements. Therefore, an easy connection process is possible by connecting the contact means to respective counter contact means of a power source.

In order to achieve an easy connectable heating unit the contact means are aligned parallel to the contact rails. Therefore, the contact direction in which the contact means are pushed against the counter contact means is in the direction of the length direction of the contact rails.

The object is furthermore achieved by the features of claim 8.

According to an embodiment an electric heater is provided, in particular for a heating or an air-conditioning system of a motor vehicle, comprising a heater core having at least one or a plurality of heating units, said heating unit has a plurality of electric heating elements arranged between metallic contact sheet elements, wherein the metallic contact sheet elements are electrically contacting the at least one electric heating element to allow an electric current flow through the heating elements, characterised in that the heating elements are arranged in a two-dimensional pattern, wherein the metallic contact sheet elements are contacting all the heating elements of a heating unit, wherein the metallic contact sheet elements have a contact means to contact a power source. This allows a structure with only a small number of electrical contacts. Therefore, the contact resistance is small due to the reduced number of such contacts.

It is of advantage that the metallic contact sheet elements are mechanically connected to the respective contact means by means of clinching. This allows a durable mechanical connection and a good electrical connection.

It is of advantage that the heating elements are arranged in a rectangular pattern having rows and columns of heating elements. This allows an effective arrangement of the heating elements. A plurality of heating elements arranged in a two-dimensional pattern is contacted on both sides by a contact sheet respectively.

Furthermore, it is of advantage that a plurality of heating units is provided which comprise metallic contact sheet elements wherein the metallic contact sheet elements of the plurality of heating units are arranged parallel to each other. This allows a compact arrangement of the unit.

Furthermore, it is of advantage that a first metallic contact sheet element is arranged in a first plane and a second metallic contact sheet element is located in a second plane, the second plane is spaced apart from the first plane and arranged parallel to the first plane.

According to another embodiment of the invention it is of advantage that the contact means are aligned perpendicular to rows of heating elements. This allows a small unit which is easy to connect.

Further preferable features and embodiments of the invention are described in the claims and the following description of the drawings.

### Description of the drawings

The invention is explained in detail below by means of an exemplary embodiment and with reference to the drawings, in which:
- Figure 1: shows a side view of a heating unit of an electrical heater,
- Figure 2: shows a plan view of the heating unit according to Figure 1,
- Figure 3: shows a side view of a heating unit of an electrical heater,
- Figure 4: shows a plan view of the heating unit according to Figure 3,
- Figure 5: shows a side view of a heating unit of an electrical heater, and
- Figure 6: shows a plan view of the heating unit according to Figure 5.

### Preferred embodiments of the invention

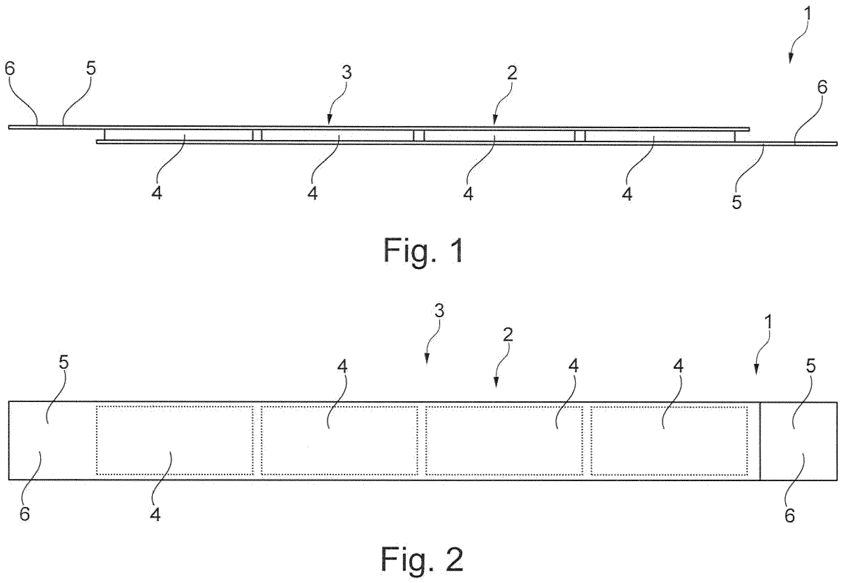

Figure 1 shows a side view of a heating unit 3 of a heater core 2 of an electric heater 1, according to an embodiment of the present invention. Figure 2 shows a plan view of the heating unit 3 according to Figure 1.

The inventive electric heater 1 might be for example utilised in a heating or an air-conditioning system of a motor vehicle, In this case the electric heater 1 heats up air, which passes the heat transfer surface of the electric heater 1 in order to supply warm air to the passenger compartment of the motor vehicle. In an alternative embodiment the electric heater may heat a liquid or another gas.

The electric heater 1 is typically arranged in an air duct of the housing of the heating or the air-conditioning system. Structurally, the electric heater 1 comprises a heater core 2. The heater core 2 features a plurality of heating units 3. The number and size of the heating units 3 can vary in different embodiments.

The Figures 1 and 2 show a heating unit 3 having at least one electric heating element 4 arranged between metallic contact sheet elements 5. The metallic contact sheet elements 5 are electrically contacting the at least one electric heating element 4 to allow an electric current flow through the heating elements in order to heat the electric heating elements 4.

As can be seen in Figures 1 and 2 the electric heating elements 4 are arranged in one row having four electric heating elements 4. The metallic contact sheet elements 5 are located on adjacent side faces of the electric heating elements 4 to connect adjacent side faces of the respective electric heating element allowing a current flow through the heating element 4. As can be seen in Figure 1 the metallic contact sheet elements 5 are arranged such that each metallic contact sheet elements 5 projects on one side of the heating unit 3 from the electric heating elements 4 such that it generates a free end 6 to create an area to connect the heating unit 3 to a contact rail or to a power source.

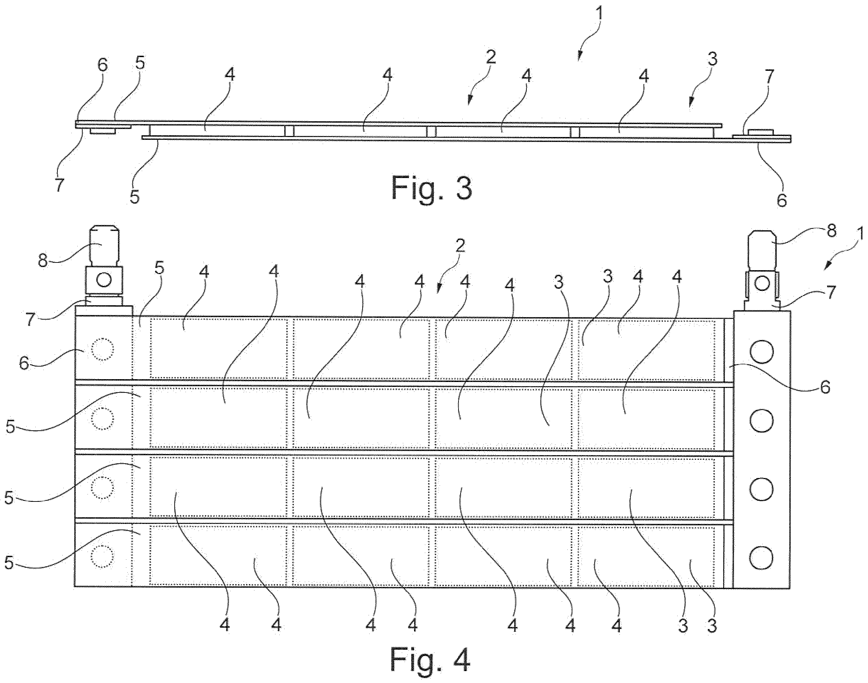

Figure 3 shows a side view of an embodiment of a heating unit 3 of a heater core 2 of an electric heater 1, according to an embodiment of the present invention. Figure 4 shows a plan view of the heating unit 3 according to Figure 3.

The inventive electric heater 1 might be for example utilised in a heating or an air-conditioning system of a motor vehicle. In this case the electric heater 1 heats up air, which passes the heat transfer surface of the electric heater 1 in order to supply warm air to the passenger compartment of the motor vehicle. In an alternative embodiment the electric heater 1 may heat a liquid or another gas.

The electric heater 1 is typically arranged in an air duct of the housing of the heating or the air-conditioning system. Structurally, the electric heater 1 comprises a heater core 2. The heater core 2 features a plurality of heating units 3. The number and size of the heating units 3 can vary in different embodiments.

The Figures 3 and 4 show a unit having four heating units 3 each having four electric heating elements 4 arranged between metallic contact sheet elements 5. The metallic contact sheet elements 5 are electrically contacting the at least one electric heating element 4 to allow an electric current flow through the heating elements in order to heat the electric heating elements 4.

As can be seen in Figures 3 and 4 the electric heating elements 4 of a heating unit 3 are arranged in one row having four electric heating elements 4. The metallic contact sheet elements 5 are located on adjacent side faces of the electric heating elements 4 to connect adjacent side faces of the respective electric heating element 4 allowing a current flow through the electric heating element 4. As can be seen in Figure 3 the metallic contact sheet elements 5 are arranged such that each metallic contact sheet element 5 projects on one side of the heating unit 3 from the electric heating elements 4 such that it generates a free end 6 to create an area to connect the heating unit 3 to a contact rail 7 or to a power source.

On both sides of the unit contact rails 7 are provided being arranged perpendicular to the length direction of the heating unit 3. Therefore, each of the heating units 3 is connected on one side to one contact rail 7 and on the other side to the other contact rail 7.

Accordingly, at least two contact rails 7 are provided such that each of the metallic contact sheet elements 5 is mechanically and electrically connected to one of the contact rails 7, which both have a contact means 8 to contact the contact rails 7 to a power source. The contact means 8 are arranged as plug or connector.

As can be seen from Figures 3 and 4 the metallic contact sheet elements 5 are mechanically and electrically connected to the respective contact rail 7 by means of clinching. Additionally, the contact means 8 are possibly connected to the contact rails 7 by clinching.

The embodiment of Figures 3 and 4 shows that a plurality of heating units 3 is provided which comprise metallic contact sheet elements 5 to contact the electric heating elements 4 wherein the metallic contact sheet elements 5 of the plurality of heating units 3 are arranged parallel to each other.

Each of the heating units 3 have a first metallic contact sheet element 5 and a second metallic contact sheet element 5, wherein the first metallic contact sheet elements 5 are connected to a first contact rail 7 and the second metallic contact sheet elements 5 are connected to a second contact rail 7 adjacent to the first contact rail 7.

As can be seen from Figures 3 and 4 the first metallic contact sheet elements 5 are arranged in a first plane and the second metallic contact sheet elements 5 are located in a second plane, the second plane is spaced apart from the first plane by the electric heating elements 4 and they are arranged parallel to the first plane. Therefore, the unit shows a flat structure.

Furthermore, the contact means 8 are aligned perpendicular to the metallic contact sheet elements 5 i.e. the length direction of the metallic contact sheet elements 5. This means that the length direction of the contact means 8 are aligned perpendicular to the length direction of the metallic contact sheet elements 5.

Accordingly, the contact means 8 are aligned parallel to the contact rails 7. This means that the length direction of the contact means 8 are aligned parallel to the length direction of the contact rails 7.

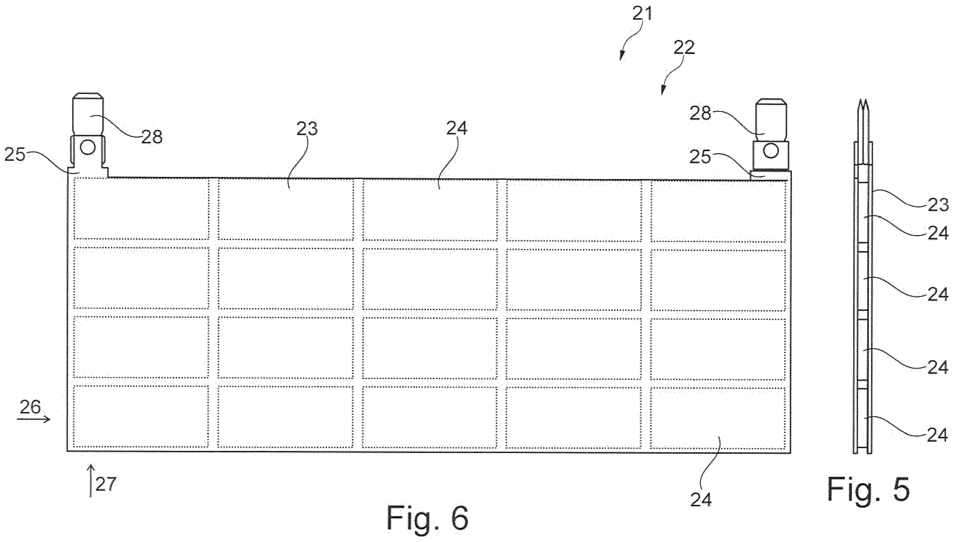

Figure 5 shows a side view of another embodiment of a heating unit 23 of a heater core 22 of an electric heater 21, according to an embodiment of the present invention. Figure 6 shows a plan view of the heating unit 23 according to Figure 5.

Figures 5 and 6 show an electric heater 21, in particular for a heating or an air-conditioning system of a motor vehicle, comprising a heater core 22 having at least one or a plurality of heating units 23. The heating unit 23 has a plurality of electric heating elements 24 arranged between metallic contact sheet elements 25, wherein the metallic contact sheet elements 25 are electrically contacting the at least one electric heating element 24 or the heating elements 24 to allow an electric current flow through the electric heating elements 24.

As can be seen in Figures 5 and 6 the electric heating elements 24 are arranged in a two-dimensional pattern. Especially the electric heating elements 24 are arranged in a rectangular pattern having rows 26 and columns 27 of electric heating elements 24. Therefore, the number of electric heating elements 24 may vary to create a respective heating unit 23.

Accordingly, the metallic contact sheet elements 25 are contacting all the electric heating elements 24 of a heating unit 23, wherein the metallic contact sheet elements 25 have a contact means 28 to contact a power source. Therefore, the metallic contact sheet elements 25 are contacting the heating elements 23 as they are arranged in the two-dimensional pattern.

From Figures 5 and 6 it is visible that the metallic contact sheet elements 25 are mechanically connected to the respective contact means 28 by means of clinching. This allows a durable mechanical and electrical connection.

An electric heater 21 according to the invention may have a plurality of heating units 23 which comprise metallic contact sheet elements 25 wherein the metallic contact sheet elements 25 of the plurality of heating units 23 are arranged parallel to each other.

Accordingly, a first metallic contact sheet element 25 is arranged in a first plane and a second metallic contact sheet element 25 is located in a second plane, the second plane is spaced apart from the first plane due to the electric heating elements 24 and arranged parallel to the first plane.

As can be seen from Figures 5 and 6 the contact means 28 are aligned perpendicular to rows 26 of electric heating elements 24. This means that the length direction of the contact means 28 is arranged perpendicular to a row 26 of electric heating elements 24 which is parallel to a length direction of the metallic contact sheet element 25.

## Claims

1. Electric heater (1, 21), in particular for a heating or an air-conditioning system of a motor vehicle, comprising a heater core (2, 22) having a plurality of heating units (3, 23), said heating units (3, 23) having at least one electric heating element (4, 24) arranged between metallic contact sheet elements (5,25), wherein the metallic contact sheet elements (5, 25) are electrically contacting the at least one electric heating element (4, 24) to allow an electric current flow through the electric heating elements (4, 24), **characterised in that** at least two contact rails (7) are provided such that each of the metallic contact sheet elements (5, 25) is mechanically and electrically connected to one of the contact rails (7), which both have a contact means (8, 28) to contact the contact rails (7) to a power source.

2. Electric heater (1, 21) according to claim 1, **characterised in that** the metallic contact sheet elements (5, 25) are mechanically connected to the respective contact rail (7) by means of clinching.

3. Electric heater (1, 21) according to claim 1 or 2, **characterised in that** a plurality of heating units (3, 23) is provided which comprise metallic contact sheet elements (5, 25) wherein the metallic contact sheet elements (5, 25) of the plurality of heating units (3, 23) are arranged parallel to each other.

4. Electric heater (1, 21) according to claim 1, 2 or 3, **characterised in that** each of the heating units (3, 23) having a first metallic contact sheet element (5, 25) and a second metallic contact sheet element (5, 25), wherein the first metallic contact sheet elements (5, 25) are connected to a first contact rail (7) and the second metallic contact sheet elements (5, 25) are connected to the second contact rail (7).

5. Electric heater (1, 21) according to claim 4, **characterised in that** the first metallic contact sheet elements (5, 25) are arranged in a first plane and the second metallic contact sheet elements (5, 25) are located in a second plane, the second plane is spaced apart from the first plane and arranged parallel to the first plane.

6. Electric heater (1, 21) according to one of the claims 1 to 5, **characterised in that** the contact means (8, 28) are aligned perpendicular to the metallic contact sheet elements (5, 25).

7. Electric heater (1, 21) according to one of the claims 1 to 6, **characterised in that** the contact means (8, 28) are aligned parallel to the contact rails (7).

8. Electric heater (21), in particular for a heating or an air-conditioning system of a motor vehicle, comprising a heater core (22) having at least one or a plurality of heating units (23), said heating unit (23) has a plurality of electric heating elements (24) arranged between metallic contact sheet elements (25), wherein the metallic contact sheet elements (25) are electrically contacting the at least one electric heating element (24) to allow an electric current flow through the electric heating elements (24), **characterised in that** the electric heating elements (24) are arranged in a two-dimensional pattern, wherein the metallic contact sheet elements (25) are contacting all the electric heating elements (24) of a heating unit (23), wherein the metallic contact sheet elements (25) have a contact means (28) to contact a power source.

9. Electric heater (21) according to claim 8, **characterised in that** the metallic contact sheet elements (25) are mechanically connected to the respective contact means (28) by means of clinching.

10. Electric heater (21) according to claim 8 or 9, **characterised in that** the electric heating elements (24) are arranged ion a rectangular pattern having rows (26) and columns (27) of electric heating elements (24).

11. Electric heater (21) according to claim 8, 9 or 10, **characterised in that** a plurality of heating units (23) is provided which comprise metallic contact sheet elements (25) wherein the metallic contact sheet elements (25) of the plurality of heating units (23) are arranged parallel to each other.

12. Electric heater (21) according to claim 8, 9, 10 or 11, **characterised in that** a first metallic contact sheet element (25) is arranged in a first plane and a second metallic contact sheet element (25) is located in a second plane, the second plane is spaced apart from the first plane and arranged parallel to the first plane.

13. Electric heater (21) according to one of the claims 8 to 12, **characterised in that** the contact means (28) are aligned perpendicular to rows of electric heating elements (24).
